# EUROPEAN PATENT APPLICATION

(11) **EP 4 538 398 A1**
(43) Date of publication of application: **16.04.2025**
(21) Application number: 23856942.0
(22) Date of filing: 15.06.2023
(51) Int. Cl.: C21D 9/56, C21D 1/00, C21D 1/63, C21D 9/573

(54) **MANUFACTURING EQUIPMENT FOR METAL BAND, ACCEPTABILITY DETERMINATION METHOD FOR METAL BAND, AND MANUFACTURING METHOD FOR METAL BAND**

(30) Priority: 25.08.2022 JP 2022134429
(71) Applicant: JFE Steel Corporation, Tokyo 100-0011 (JP)
(72) Inventor: KOBAYASHI, Hirokazu, Tokyo 100-0011 (JP); NAKAMURA, Mitsuru, Tokyo 100-0011 (JP)
(74) Representative: Scott, Stephen John
(86) International application number: PCT/JP2023/022299
(87) International publication number: WO 2024/042825

(57) **Abstract**

A production line for a metal strip, a method of producing a metal strip, and a method of determining acceptability of a metal strip can reliably perform quality assurance regarding the warpage shape of a metal strip. The production line for a metal strip includes a heating unit (6) that continuously heats a metal strip being conveyed, a cooling unit (8) that cools the metal strip heated in the heating unit, a shape adjustment unit (13) that performs shape adjustment of the metal strip cooled in the cooling unit, a first warpage shape measurement unit (14), located downstream of the shape adjustment unit, that measures a warpage shape of the metal strip, and a warpage shape identification unit (41) that identifies positional information from a tip of the metal strip and identifies a correspondence relationship between the warpage shape and the positional information from the tip.

## Description

### TECHNICAL FIELD

The present disclosure relates to a production line for a metal strip, a method of determining acceptability of a metal strip, and a method of producing a metal strip.

### BACKGROUND

In a continuous annealing line for a metal strip, it is important to control heat treatment conditions such as heating and cooling in order to provide the required mechanical properties to the metal strip being treated. In the production of high strength steel sheets, heat treatment conditions are often controlled by increasing the cooling rate to quench the metal strip and also performing a tempering process to reheat the metal strip after quenching from the perspective of improving press formability.

A continuous annealing line for producing high strength steel sheets includes a heating zone, a soaking zone, and a cooling zone. Cooling methods in the cooling zone include liquid quenching, roller quenching, gas-water mixing (mist) cooling, and gas jet cooling. The appropriate cooling method is selected to control the material properties of the metal strip.

Of these, the liquid quenching method, in which the metal strip is immersed in a liquid, has the fastest cooling rate and requires less addition of alloying elements to increase the strength of the metal strip, making the liquid quenching method suitable for producing high strength steel sheets. The liquid quenching method generally involves immersing the heated metal strip in a liquid and simultaneously injecting cooling liquid through a slit nozzle, provided in the liquid, onto the metal strip for rapid cooling (quenching). The quenched metal strip is then heated again through a drying process after excess liquid is scraped off with a rubber roll pressed against the metal strip or by gas wiping via gas injection from a slit nozzle.

When the metal strip is cooled rapidly, the shape of the metal strip tends to collapse due to thermal contraction of the metal strip and volumetric expansion associated with phase transformation of the microstructure. In addition, since the yield stress of the quenched metal strip is extremely high, even if a temper rolling mill located downstream of the continuous annealing line is used, the metal strip cannot be provided with the elongation ratio necessary for shape adjustment, and shape defects tend to remain in the metal strip that becomes a product.

On the other hand, Patent Literature (PTL) 1 discloses a technique in which the metal strip is restrained by a restraining roller during rapid quenching in a temperature range specified by the temperatures at which martensite transformation of the metal strip starts and ends. This technique is purported to suppress shape defects that occur in the metal strip after quenching.

PTL 2 describes a method of controlling the shape of a metal strip by a rolling mill such as a temper rolling mill, in which the shape of the metal strip is measured using a shape meter, and a shape control actuator of the rolling mill is operated based on the deviation between the measured shape and the target shape. The shape meter used in this case is a contact-type shape meter with a plurality of load cells embedded inside the shape measuring roller to estimate the distribution of elongation in the sheet transverse direction of the metal strip from the contact load distribution in the sheet transverse direction.

PTL 3 discloses a technique for applying work rolls with a surface average roughness of more than 10.0 µm as a method of reducing the warpage height of the metal strip after temper rolling in the case of temper rolling a high strength steel sheet.

### CITATION LIST

### Patent Literature

PTL 1: JP 6094722 B
PTL 2: JP 6673285 B
PTL 3: JP 2013-176802 A

### SUMMARY

### (Technical Problem)

However, the method disclosed in PTL 1 requires identifying the temperature range in which phase transformation occurs in the metal strip and restraining the metal strip with a restraining roller in that temperature range. There is room for improvement in that the shape of the metal strip after cooling changes as a result of a change in the cooling start temperature due to changes in the metal strip conveying speed and the like as operating conditions of a continuous annealing line. In particular, when the strength level of a high strength steel sheet increases, it may be impossible to flatten the shape of the metal strip, and in the longitudinal direction, the metal strip may be left with areas having shape defects.

On the other hand, the method disclosed in PTL 2 dynamically controls the shape of the metal strip based on the shape of the metal strip measured at the delivery-side of the temper rolling mill and can stabilize the shape of the metal strip in the longitudinal direction. However, the shape meter described in PTL 2 estimates the distribution of elongation in the sheet transverse direction of the metal strip and does not measure the warpage shape of the metal strip. In particular, it is difficult to perform quality assurance regarding the warpage height of the metal strip, because it is not possible to measure the buckling shape, which is approximated by a W-shape or even higher-order function of the cross-sectional shape in the sheet transverse direction, as in a high strength steel sheet after rapid cooling.

The method disclosed in PTL 3 performs temper rolling using work rolls having a specific surface roughness as shape adjustment means for a high strength steel sheet after quenching, so as to reduce the warpage height of the metal strip. However, the warpage height of the metal strip after temper rolling is measured off-line after sample sheets are cut from the metal strip. Therefore, it is not possible to determine whether the specifications for warpage are satisfied over the entire length of the metal strip. Furthermore, after quenching, the metal strip has a warpage height variation in the longitudinal direction. Combined with the fact that the shape adjustment effect of the temper rolling mill is not sufficient when the strength level of the high strength steel sheet is high, it becomes difficult to guarantee that the product specifications for warpage shape are met across the longitudinal direction of the metal strip.

It is an aim of the present disclosure to provide a production line for a metal strip and a method of producing a metal strip that can reliably perform quality assurance regarding the warpage shape of a metal strip in a production line for a metal strip, the production line including a cooling unit configured to cool the metal strip and a shape adjustment unit configured to perform shape adjustment of the cooled metal strip. The present disclosure also provides a method of determining acceptability regarding warpage height as the shape of the metal strip in the aforementioned production line for a metal strip.

### (Solution to Problem)

(1) A production line for a metal strip according to an embodiment of the present disclosure includes:
   a heating unit configured to continuously heat a metal strip being conveyed;
   a cooling unit configured to cool the metal strip heated in the heating unit;
   a shape adjustment unit configured to perform shape adjustment of the metal strip cooled in the cooling unit;
   a first warpage shape measurement unit located downstream of the shape adjustment unit and configured to measure a warpage shape of the metal strip; and
   a warpage shape identification unit configured to identify positional information from a tip of the metal strip and identify a correspondence relationship between the warpage shape of the metal strip measured by the first warpage shape measurement unit and the positional information from the tip of the metal strip.
(2) As an embodiment of the present disclosure, in (1),
   the production line for a metal strip is a continuous annealing line for a metal strip, and
   the cooling unit includes a cooling fluid injection apparatus and at least a pair of restraining rollers that restrain the metal strip, the cooling fluid injection apparatus comprising a plurality of nozzles that inject a cooling fluid onto the metal strip from both sides of the metal strip.
(3) As an embodiment of the present disclosure, in (1) or (2),
   the production line for a metal strip is a continuous annealing line for a metal strip, and
   the shape adjustment unit comprises at least one shape adjustment means selected from a temper rolling mill, a tension leveler, and a roller leveler.
(4) As an embodiment of the present disclosure, in any one of (1) to (3),
   the production line for a metal strip further includes a second warpage shape measurement unit configured to measure the warpage shape of the metal strip between the cooling unit and the shape adjustment unit, and
   the warpage shape identification unit is configured to identify a correspondence relationship between the warpage shape of the metal strip measured by the first warpage shape measurement unit, the warpage shape of the metal strip measured by the second warpage shape measurement unit, and the positional information from the tip of the metal strip.
(5) As an embodiment of the present disclosure, in any one of (1) to (3),
   the production line for a metal strip further includes a third warpage shape measurement unit configured to measure the warpage shape of the metal strip between the heating unit and the cooling unit, and
   the warpage shape identification unit is configured to identify a correspondence relationship between the warpage shape of the metal strip measured by the first warpage shape measurement unit, the warpage shape of the metal strip measured by the third warpage shape measurement unit, and the positional information from the tip of the metal strip.
(6) As an embodiment of the present disclosure, in any one of (1) to (3),
   the production line for a metal strip further includes a second warpage shape measurement unit configured to measure the warpage shape of the metal strip between the cooling unit and the shape adjustment unit, and a third warpage shape measurement unit configured to measure the warpage shape of the metal strip between the heating unit and the cooling unit, and
   the warpage shape identification unit is configured to identify a correspondence relationship between the warpage shape of the metal strip measured by the first warpage shape measurement unit, the warpage shape of the metal strip measured by the second warpage shape measurement unit, the warpage shape of the metal strip measured by the third warpage shape measurement unit, and the positional information from the tip of the metal strip.
(7) As an embodiment of the present disclosure, in any one of (1) to (6),
   the warpage shape of the metal strip is measured using at least one warpage shape measurement method selected from a distance measurement method, an image processing method, and an optical cutting method.
(8) A method of determining acceptability of a metal strip according to an embodiment of the present disclosure includes:
   a heating step of continuously heating a metal strip being conveyed;
   a cooling step of cooling the metal strip heated in the heating step;
   a shape adjustment step of performing shape adjustment of the metal strip cooled during the cooling step;
   a first warpage shape measurement step of measuring a warpage shape of the metal strip after the shape adjustment step;
   a warpage shape identification step of identifying positional information from a tip of the metal strip and identifying a correspondence relationship between the warpage shape of the metal strip measured in the first warpage shape measurement step and the positional information from the tip of the metal strip; and
   a step of displaying a distribution state of warpage height to allow determination of acceptability of the metal strip based on the correspondence relationship, identified in the warpage shape identification step, between the warpage shape of the metal strip and the positional information from the tip of the metal strip.
(9) As an embodiment of the present disclosure, in (8),
   in the cooling step, a fluid is injected onto the metal strip by a plurality of nozzles from both sides of the metal strip while the metal strip is being restrained using at least a pair of restraining rollers.
(10) As an embodiment of the present disclosure, in (8) or (9),
   in the shape adjustment step, the shape adjustment of the metal strip is performed using at least one shape adjustment means selected from a temper rolling mill, a tension leveler, and a roller leveler.
(11) A method of producing a metal strip according to an embodiment of the present disclosure includes:
   producing a metal strip determined to be acceptable by the method of determining acceptability of a metal strip according to any one of (8) to (10).

### (Advantageous Effect)

According to the present disclosure, it is possible to provide a production line for a metal strip and a method of producing a metal strip that can reliably perform quality assurance regarding the warpage shape of a metal strip in a production line for a metal strip, the production line including a cooling unit configured to cool the metal strip and a shape adjustment unit configured to perform shape adjustment of the cooled metal strip. According to the present disclosure, it is also possible to provide a method of determining acceptability regarding warpage height as the shape of the metal strip in the aforementioned production line for a metal strip.

### BRIEF DESCRIPTION OF THE DRAWINGS

In the accompanying drawings:
FIG. 1 is a schematic diagram illustrating an example configuration of a production line for a metal strip according to an embodiment of the present disclosure;
FIG. 2 is a diagram illustrating the thermal history of a metal strip;
FIG. 3 is a diagram illustrating an apparatus configuration for water cooling;
FIG. 4 is a diagram illustrating an example configuration of a shape adjustment unit;
FIG. 5 is a diagram illustrating an example of the warpage shape of a metal strip;
FIG. 6 is a diagram illustrating an example of using a laser-scanning distance meter as a warpage shape measurement means;
FIG. 7 is a diagram illustrating an example of a plurality of laser-scanning distance meters arranged in the sheet transverse direction;
FIG. 8 is a diagram illustrating the distribution state of the warpage height of a metal strip; and
FIG. 9 is a diagram illustrating the distribution state of the warpage height of a metal strip.

### DETAILED DESCRIPTION

A production line for a metal strip, a method of determining acceptability of a metal strip, and a method of producing a metal strip according to an embodiment of the present disclosure will be described below with reference to the drawings. In each figure, identical or equivalent parts are marked with the same symbol. In the description of the present embodiment, a description of identical or equivalent parts will be omitted or simplified as appropriate.

An apparatus for producing a metal strip in the present embodiment is a production line whose main purpose is to perform heat treatment on steel sheets that have been reduced to a predetermined thickness through a hot rolling process, pickling process, and cold rolling process, and in particular, forms part of a continuous annealing line for performing continuous annealing of metal strips. At least after the hot rolling step, the metal sheet is coiled before heat treatment and the like are performed. The metal sheet is therefore described as a "metal strip" in the present embodiment. The production line for a metal strip in the present embodiment is mainly for performing heat treatment on steel sheets. In other words, the metal strip refers mainly to a steel strip. The thickness of the metal strip is, for example, 0.4 mm to 3.2 mm. The width of the metal strip is, for example, 700 mm to 1800 mm. The length of the metal strip is, for example, 600 m to 4000 m.

### <Production line>

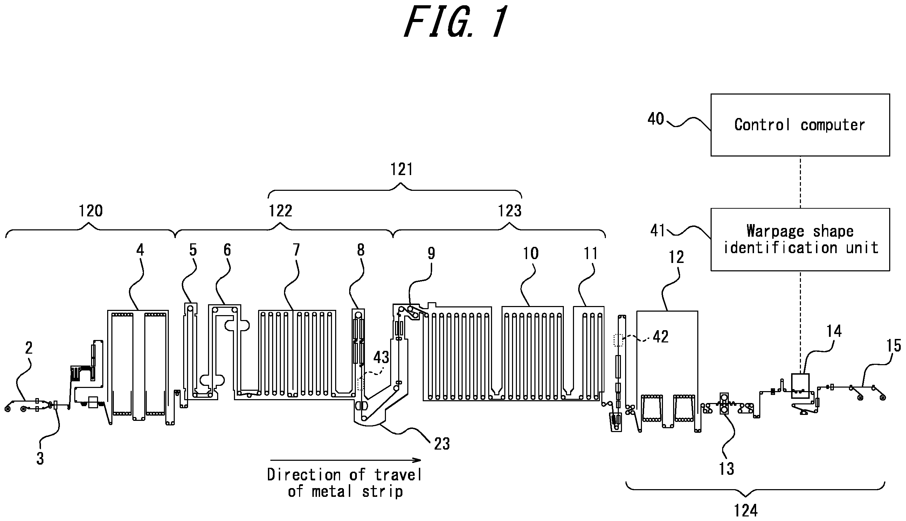

Using a continuous annealing line for a metal strip as an example, the production line for a metal strip according to an embodiment of the present disclosure will be described. FIG. 1 is a schematic diagram illustrating an example of line equipment in a continuous annealing line for producing cold-rolled steel sheets according to the present embodiment. The solid arrow in FIG. 1 indicates the direction of travel of the metal strip. "Upstream" and "downstream" in the following explanation are defined based on the direction of travel of the metal strip. The dashed lines in FIG. 1 indicate that information is transmitted and received by communication.

The continuous annealing line is broadly classified into an entry-side line 120, a furnace line 121, and a delivery-side line 124. The entry-side line 120 has a payoff reel 2, a welder 3, and an entry-side looper 4. The furnace line 121 is configured by an annealing line 122 and a reheating line 123. The annealing line 122 has a heating zone 6, a soaking zone 7, and a cooling zone 8, and may have a preheating zone 5 upstream of the heating zone 6. The reheating line 123 has a reheating zone 9, an overaging zone 10, and a final cooling zone 11. An induction heating apparatus is arranged in the reheating zone 9. The delivery-side line 124 has a delivery-side looper 12, a shape adjustment apparatus (shape adjustment unit 13), a first warpage shape measurement apparatus (first warpage shape measurement unit 14), and a tension reel 15.

The metal strip annealing step performed by the continuous annealing line is a step in which the metal strip is heated from near room temperature, held at a predetermined temperature, and then lowered in temperature to near room temperature. In the continuous annealing line illustrated in FIG. 1, the annealing step is performed by the heating zone 6, the soaking zone 7, and the cooling zone 8. The reheating step is a step of performing overaging treatment of the metal strip that has passed through the cooling zone 8. In the continuous annealing line illustrated in FIG. 1, the reheating step is performed in the reheating zone 9, the overaging zone 10, and the final cooling zone 11.

In the heating zone 6, equipment is arranged to raise the temperature of the metal strip for heating to a pre-set temperature in the range of about 600 °C to 900 °C, depending on the chemical composition of the metal strip. In the heating zone 6, a direct or radiant combustion burner is used. These heating apparatuses have a large heating capacity and a relatively fast response, making it easy to change the temperature rise history during heat cycle changes. The soaking zone 7 is a line for maintaining the metal strip at a predetermined temperature and has enough heating capacity to compensate for factors such as heat dissipation from the furnace body.

The cooling zone 8 is a line for cooling the metal strip to a predetermined temperature. Liquid cooling, gas jet cooling, roller quenching, mist cooling (gas-liquid mixed cooling), and the like are used as coolers. Liquid cooling is often performed by water cooling (water quenching) using water. Here, water cooling (an example of liquid cooling) is a cooler for cooling the metal strip by immersing the metal strip in an immersion tank 23 installed downstream of the soaking zone 7. Gas jet cooling is a cooler for blowing gas from a nozzle onto the surface of the metal strip. Roller quenching is a cooler for cooling the metal strip by bringing it into contact with a water-cooled roller. Mist cooling is a cooler for spraying water in a fine mist and cooling by absorption of the heat of vaporization. In mist cooling, the size of the water droplets sprayed is often about 0.1 mm to 1 mm.

The reheating line 123 is located downstream of the cooling zone 8. After being cooled to a predetermined temperature in the cooling zone 8, the metal strip is reheated to a temperature of about 300 °C to 400 °C using an induction heating apparatus or the like arranged in the reheating zone 9. The overaging zone 10 is a line for performing overaging treatment, in which the reheated metal strip is held for a predetermined time. The final cooling zone 11 is a line for final cooling, to near room temperature, of the metal strip that has undergone overaging treatment. However, the continuous annealing line need not be provided with the reheating line 123.

The delivery-side looper 12 is a line for temporarily storing the metal strip in order to coordinate the conveying speed of the metal strip in the furnace line 121 and the processing speed in the delivery-side line 124. The shape adjustment unit 13 is a line for flattening the shape of the metal strip, and one or more of a temper rolling mill, a tension leveler, and a roller leveler is arranged therein. The first warpage shape measurement unit 14 is an apparatus located downstream of the shape adjustment unit 13 and configured to measure the warpage shape of the metal strip. The tension reel 15 is a line for coiling the metal strip. Some metal strips wound as coils are shipped as product coils. Some coiled metal strips are sent to a recoil line for procedures such as adjusting the dimensions or weight of the metal strip, collecting samples for quality assurance, inspecting the shape or dimensions, and rewinding the coil. In some cases, a metal strip that is wound as a coil is sent to a surface treatment line where the metal strip is plated as surface treatment.

The continuous annealing line illustrated in FIG. 1 is also provided with a control computer 40 that manages the operation of the continuous annealing line. The control computer 40 sets the processing conditions for the metal strip in the entry-side line 120, the furnace line 121, and the delivery-side line 124 of the continuous annealing line and collects sensor information acquired from a controller for control to acquire various information on the operational performance of the metal strip. The control computer 40 also tracks the welded portion between the metal strip of the preceding line and the metal strip of the following line, which are connected by the welder 3, to identify the current position of the welded portion in the continuous annealing line.

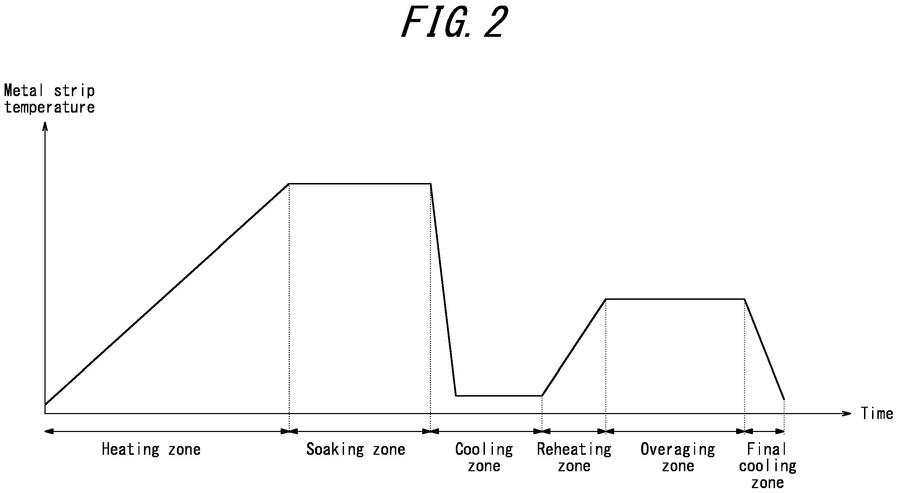

FIG. 2 illustrates the thermal history of the metal strip during the annealing step and reheating step. The horizontal axis represents time, and the vertical axis represents the metal strip temperature. The metal strip temperature is, for example, the surface temperature of the metal strip. The annealing step is performed by the heating zone 6, the soaking zone 7, and the cooling zone 8. Subsequently, the reheating step is performed by the reheating zone 9, the overaging zone 10, and the final cooling zone 11. To prevent material property variation due to the longitudinal position of the metal strip, the conveying speed of the metal strip during the annealing step is kept constant to the extent possible. However, when metal strips of different thicknesses, widths, and steel types are welded and continuously conveyed, the line speed may vary before and after the welded portion.

### <Heating unit>

The heating unit in the present embodiment refers to an apparatus or compartment that continuously heats the metal strip being conveyed. The process performed in the heating unit is called the heating step. In other words, the heating step for continuously heating the metal strip being conveyed is performed in the heating unit. In the continuous annealing line illustrated in FIG. 1, the heating unit is the heating zone 6 or the reheating zone 9. However, the heating unit is preferably the heating zone 6. The reason is that in the heating zone 6, the metal strip is heated to or above the recrystallization temperature or to the austenite transformation start temperature (A_{C3}), which makes the shape of the metal strip easily disrupted upon cooling the high-temperature metal strip. The effects of the method of the present disclosure are thereby easily achieved.

### <Cooling unit>

The cooling unit in the present embodiment refers to an apparatus or compartment that cools the metal strip heated by the heating unit. The process performed in the cooling unit is called the cooling step. In other words, the cooling step for cooling the metal strip heated in the heating step is performed in the cooling unit. In the continuous annealing line illustrated in FIG. 1, the cooling unit corresponds to the cooling zone 8 or the final cooling zone 11. However, the cooling unit may be an apparatus or compartment that performs rapid cooling of the metal strip in a portion of the cooling zone 8. Furthermore, the cooling unit is preferably a cooling apparatus that performs water cooling (water quench), which is liquid cooling using water as a refrigerant, as the cooling method in the cooling zone 8. The reason is that the shape of the metal strip after cooling may be easily disrupted due to cooling of the metal strip, which was heated in the heating unit, to a temperature lower than the martensite transformation start temperature (Ms) or bainite transformation start temperature (Bf). The effects of the method of the present disclosure are thereby easily achieved.

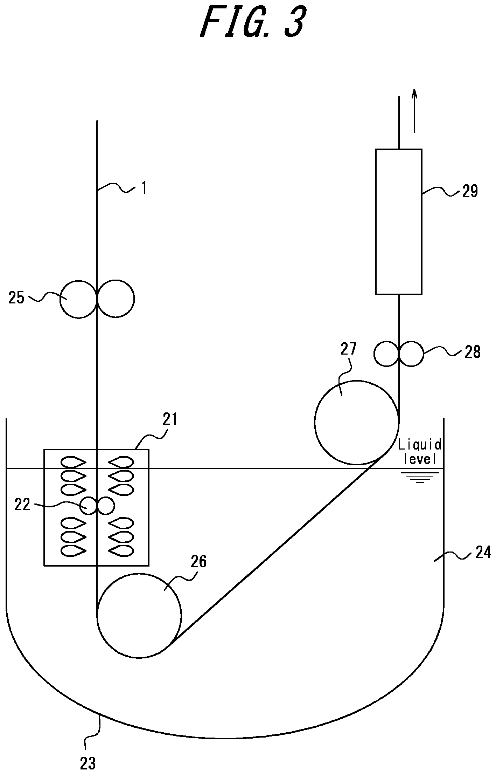

FIG. 3 is a diagram illustrating an apparatus configuration for water cooling as a cooling method. The cooling apparatus using a water cooling method is configured by a cooling fluid injection apparatus 21, which is provided with water injection nozzles; an immersion tank 23; and deflector rollers 26, 27. The cooling apparatus, which cools based on a water cooling method, may be provided as necessary with a suppression roller 25 to prevent the metal strip (indicated by 1 in FIG. 3) from flapping. After the metal strip passes through the immersion tank 23, water adhering to the metal strip is removed by the draining roller 28, and the metal strip is dried in the drying furnace 29 before being sent to the reheating zone 9. In a case in which a cooling apparatus using a water cooling method is included, the immersion tank 23 becomes the cooling unit in the continuous annealing line illustrated in FIG. 1. This is because the compartment where the metal strip is quenched is in the immersion tank 23.

The immersion tank 23 is shaped like a container to allow storage of a coolant 24 for immersion and cooling of the metal strip. A non-illustrated cooling chiller may be provided to circulate and cool the coolant 24 in the immersion tank 23 to suppress a rise in temperature of the coolant 24 stored in the immersion tank 23 and to control the water temperature of the coolant 24 to be within a predetermined range.

The cooling fluid injection apparatus 21 is a water cooling nozzle unit that injects the coolant 24 onto the metal strip for cooling. In the cooling fluid injection apparatus 21, a pair of water injection nozzles are arranged in multiple stages on both sides of the running metal strip in order to inject the coolant 24 on the front and back surfaces of the running metal strip. Then, by the coolant 24 being sprayed from these multi-stage water injection nozzles onto both the front and back surfaces of the metal strip, the metal strip that has passed through the soaking zone 7 can be cooled.

The cooling fluid injection apparatus 21 may be configured to include a pair of restraining rollers 22 for suppressing deformation of the metal strip and preventing the metal strip from deteriorating in shape. The restraining rollers 22 are arranged to sandwich the metal strip from the front and back sides, and the restraining rollers 22 on the front and back sides of the metal strip may be staggered with respect to the direction of travel of the metal strip. At least one of the restraining rollers 22 arranged on the front and back sides may be provided with a position adjustment function to displace the restraining roller 22 relative to the metal face so that the amount of push into the metal strip is variable. Furthermore, a plurality of pairs of restraining rollers 22 may be arranged in the direction of travel of the metal strip in the cooling fluid injection apparatus 21.

By arrangement of the restraining rollers 22 together with the cooling fluid injection apparatus 21, the deformation of the metal strip can be restrained between the martensite transformation start temperature (Ms) and finish temperature (Mf) of the metal strip. This can reduce shape defects in the metal strip caused by thermal contraction that occurs when the metal strip is quenched and by volume changes due to phase transformation.

The deflector rollers 26, 27 apply a predetermined tension to the metal strip and change the conveying direction of the metal strip. As a result, the metal strip immersed in the coolant 24 stored in the immersion tank 23 is guided upward above the liquid level of the coolant 24. In this case, at least one of the deflector rollers 26, 27 is arranged to be immersed in the coolant 24 in the immersion tank 23.

### <Shape adjustment unit>

The shape adjustment unit 13 in the present embodiment refers to an apparatus or compartment that performs shape adjustment on the metal strip cooled by the cooling unit. The process performed in the shape adjustment unit 13 is called the shape adjustment step. In other words, the shape adjustment step for performing shape adjustment on the metal strip cooled in the cooling step is performed in the shape adjustment unit 13. The shape adjustment unit 13 preferably uses at least one shape adjustment means selected from a temper rolling mill, a tension leveler, and a roller leveler. The temper rolling mill is an apparatus that flattens the shape of the metal strip by pressing down the metal strip in the thickness direction using a pair of upper and lower work rolls to provide the metal strip with an elongation of about 0.1 % to 3.0 %. The tension leveler is an apparatus that corrects the shape of the metal strip by applying bending deformation while applying tension to the metal strip, using at least one pair of staggered upper and lower adjusting rolls. A roller leveler is an apparatus that corrects the shape of the metal strip by repeatedly applying bending and bending-back deformation to the metal strip using a plurality of staggered pairs of adjusting rolls. The shape adjustment means arranged in the shape adjustment unit 13 may be configured by a combination of two or more of these. For example, the shape adjustment unit 13 may include a temper rolling mill and a tension leveler downstream of the temper rolling mill. This is because the combination of a plurality of shape adjustment means can effectively adjust the shape of high strength steel sheets.

In a case in which a temper rolling mill 30 is used in the shape adjustment unit 13, the warpage shape of the metal strip can be changed by varying the plastic strain applied to the metal strip, such as the elongation ratio, as an operating condition of the temper rolling mill 30. Also in a case in which a tension leveler is used in the shape adjustment unit 13, the warpage shape of the metal strip can be changed by varying the plastic strain applied to the metal strip, such as the elongation ratio, as an operating condition of the tension leveler. In a case in which a roller leveler is used in the shape adjustment unit 13, the plastic strain imparted to the metal strip is changed by varying the amount of push of the adjusting roll, and this can change the warpage shape. The operating conditions of the shape adjustment unit are set by the control computer 40, taking into account constraints of the line and other factors.

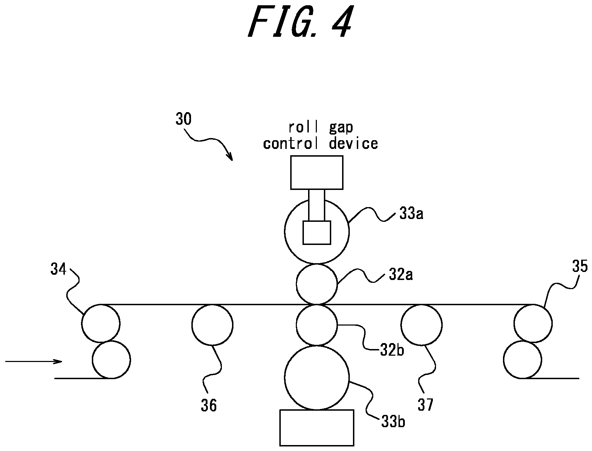

FIG. 4 illustrates a configuration of the temper rolling mill 30 that can be used in the shape adjustment unit 13. The temper rolling mill 30 is provided with a pair of work rolls 32a, 32b, which are in direct contact with the metal strip to be rolled and apply pressure, and a pair of backup rolls 33a, 33b, which support the pair of work rolls 32a, 32b from above and below to suppress deflection of the work rolls 32a, 32b. At least one roll among the work rolls 32a, 32b and backup rolls 33a, 33b is connected at one end to a drive motor via couplings or reduction gears and is rotated by the drive motor. The backup rolls 33a, 33b are supported by a bearing housing (backup roll chock) at the shaft end, and the gap (roll gap) between the work roll 32a and the work roll 32b can be adjusted by displacing the bearing housing up and down with a roll gap control device.

In front of and behind the temper rolling mill 30 are an entry-side bridle roller 34, an entry-side tension meter 36, a delivery-side tension meter 37, and a delivery-side bridle roller 35. The entry-side bridle roller 34 and the delivery-side bridle roller 35 are rollers for applying appropriate tension to the metal strip. The entry-side tension meter 36 and delivery-side tension meter 37 are installed between the temper rolling mill 30 and the entry-side bridle roller 34 and between the temper rolling mill 30 and the delivery-side bridle roller 35, respectively, to measure the tension of the metal strip on the entry and delivery sides of the temper rolling mill 30. A shape meter may be arranged between the temper rolling mill 30 and the delivery-side bridle roller 35 to measure the shape of the metal strip. In this case, the shape meter is a contact-type shape meter. A shape meter with a plurality of load cells embedded inside the shape measuring roller may be used to estimate the distribution of elongation in the sheet transverse direction of the metal strip from the contact load distribution in the sheet transverse direction.

In the temper rolling step for the metal strip using the temper rolling mill 30, the metal strip that has passed through the cooling unit is rolled at a predetermined elongation rate. The elongation rate refers to the elongation ratio before and after temper rolling of the metal strip and is defined as the percentage increase in the length of the metal strip from before to after the temper rolling process. The elongation rate is measured by the difference in peripheral speed between the entry-side bridle roller 34 and the delivery-side bridle roller 35. In this case, the controller for control of the temper rolling mill 30 changes the settings of the roll gap control device of the temper rolling mill 30, and control is performed so that the measured elongation rate matches the target elongation rate. However, in a case in which the metal strip is a high strength steel sheet with a tensile strength of 1180 MPa or higher, the rolling load is higher, so the elongation rate required for shape adjustment of the metal strip (for example, 0.2 %) cannot be ensured, and shape defects in the metal strip generated at the cooling unit might not be sufficiently flattened. In contrast, PTL 3 describes a method of temper rolling using work rolls with a specific roughness on the sheet surface. A method of reducing rolling load by using carbide rollers with cobalt, tungsten carbide, or other additives as the work rolls 32a, 32b instead of steel-based materials may also be applied. However, in a case in which the shape of the metal strip is greatly disrupted, these shape adjustment means may result in residual warpage of the metal strip.

### <Warpage shape measurement unit>

In the present embodiment, the first warpage shape measurement unit 14, which is an apparatus located downstream of the shape adjustment unit 13, is used to measure the warpage shape of the metal strip that has undergone the shape adjustment step. In other words, the first warpage shape measurement step is performed in the first warpage shape measurement unit 14 to measure the warpage shape of the metal strip after the shape adjustment step. The warpage shape refers to the height distribution of the metal strip in the sheet transverse direction. L warpage (longitudinal warpage) and C warpage (width warpage) are known as examples of metal strip warpage. The warpage shape in the present embodiment includes C warpage but does not include L warpage. The reason is that it is difficult to measure L warpage online, because L warpage is constrained by line tension as the metal strip is continuously conveyed. In other words, the warpage shape in the present embodiment includes C warpage, which can be approximated by a quadratic function in the sheet transverse direction of the metal strip, and the height distribution in the sheet transverse direction, which can be approximated by a function of third order or higher. Here, the fact that the curve can be approximated by a function of third order or higher means that the height distribution of the metal strip in the sheet transverse direction has two or more inflection points.

In-plane stress occurs in the sheet transverse direction of the metal strip after the cooling step and shape adjustment step are completed, and the height distribution in the sheet transverse direction of the metal strip is caused by an inability to maintain this in-plane stress within the plane of the metal strip, causing the metal strip to be displaced out of plane due to buckling. Wave-like shape defects, called edge wave or center buckle, may appear as shape defects in the metal strip. In-plane stress occurs in the longitudinal direction of the metal strip as a result of elongation in the longitudinal direction of the metal strip being distributed in the sheet transverse direction, and the wave-like shape defects are caused by an inability to maintain this in-plane stress within the plane of the metal strip, causing the metal strip to be displaced out of plane due to buckling. Although the aforementioned warpage shape and wave-like shape share the same out-of-plane deformation caused by buckling, they differ in that the direction of the stress that causes the buckling is either the sheet transverse direction or the longitudinal direction.

Therefore, in the case of a wave-like shape, if tension is applied in the longitudinal direction of the metal strip, the difference in elongation in the sheet transverse direction (the difference in the elongation in the sheet transverse direction) is absorbed, and shape defects in the metal strip become latent. In other words, wave-like shape defects are often changed to an apparently flat shape by application of tension in the longitudinal direction of the metal strip. In contrast, the warpage shape differs in that tension applied in the longitudinal direction of the metal strip does not have a significant effect on the stress in the sheet transverse direction, so the change in the warpage shape of the metal strip is small even when tension is applied. A contact-type shape meter, such as the shape meter described in PTL 2, may be arranged between the temper rolling mill 30 and the delivery-side bridle roller 35. The contact-type shape meter arranged in this way applies a large tension (for example, 100 MPa to 200 MPa) between the temper rolling mill 30 and the delivery-side bridle roller 35 to make potential shape defects in the metal strip latent and to measure the contact load distribution in the sheet transverse direction. In other words, although the contact-type shape meter can measure the wave-like shape occurring in the metal strip, it does not measure the warpage shape. Another difference is that the warpage shape is less prone to periodic displacement in the longitudinal direction of the metal strip, whereas the wave-like shape varies periodically in the height direction of the metal strip with respect to the longitudinal direction of the metal strip. Here, the wave-like shape of the metal strip is often periodic with a pitch of about 0.5 m to 5 m in the longitudinal direction of the metal strip. Therefore, in a case in which the displacement of the metal strip in the height direction does not vary at such a pitch, the shape may be considered to be a warpage shape.

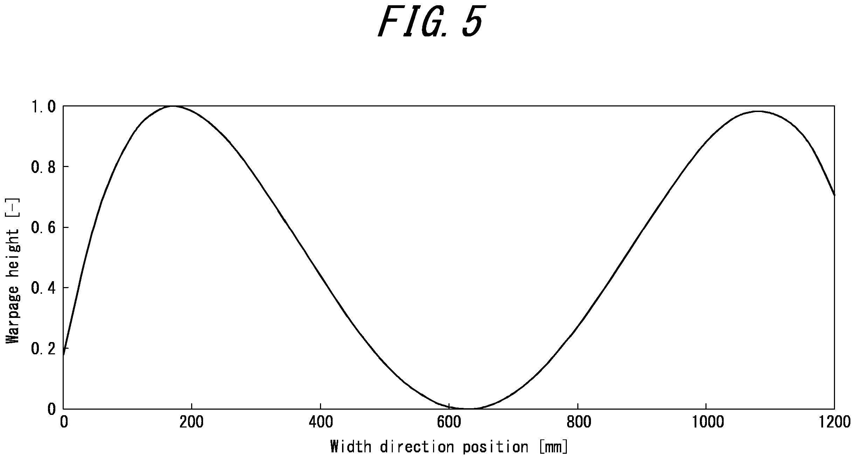

In the present embodiment, the first warpage shape measurement unit 14 measures the height distribution in the sheet transverse direction of the metal strip and identifies the warpage shape of the metal strip. The warpage shape of the metal strip can be data representing the warpage height at each position in the sheet transverse direction or information representing the warpage height at each position in the sheet transverse direction as a curve. FIG. 5 illustrates an example of the warpage shape of a metal strip. The example in FIG. 5 illustrates a high strength steel sheet after rapid cooling by water quenching. When a high strength steel sheet is rapidly cooled by water quenching, a cross-section of the metal strip in the sheet transverse direction often has a shape that can be approximated by a function curve of higher order. Here, FIG. 5 illustrates an example of a high strength steel sheet with a thickness of 1.2 mm and a width of 1200 mm, measured after the cooling step and temper rolling step were completed. The average of the height distribution of the metal strip as measured at 20 locations at 100 mm pitch in the longitudinal direction was calculated, and the height distribution normalized by the maximum height in the sheet transverse direction is represented. In addition to a curve representing the relationship between the position in the sheet transverse direction and the warpage height as the warpage shape in the present embodiment, as illustrated in FIG. 5, parameters that can identify the warpage shape of the metal strip, such as the average warpage height at the sheet transverse direction, the maximum height, and the standard deviation, can be used. In this case as well, the warpage shape may be calculated by averaging the warpage height at each position in the sheet transverse direction over a range of about 1 m to 5 m in the longitudinal direction of the metal strip. The reason is that even if the height distribution of the metal strip to be measured includes both the warpage shape and the wave-like shape, the warpage shape can be identified by excluding the periodically changing wave-like shape. The curve representing the relationship between the position in the sheet transverse direction and the warpage height may be approximated by a function, and the parameters representing the approximated function may be used as the warpage shape.

Any means that can measure the height distribution in the sheet transverse direction of the metal strip can be selected for the measurement of the warpage shape of the metal strip. The warpage shape of the metal strip may be measured using at least one warpage shape measurement method selected from a distance measurement method, an image processing method, and an optical cutting method. The image processing method measures the warpage shape from a captured image of the surface of the metal strip. In the image processing method, the warpage shape can be measured from an image projected onto the surface of the metal strip by grid projection, the moiré method, or the like. The distance measurement method uses a distance meter. As warpage shape measuring means, a plurality of laser type distance meters, which are non-contact and measure distance in a specific direction, may be arranged with respect to the sheet transverse direction of the metal strip being conveyed, and the warpage height at each position may be measured. In this case, the number of distance meters to be arranged in the sheet transverse direction of the metal strip is preferably 3 or more. The number of distance meters to be arranged in the sheet transverse direction of the metal strip is preferably 100 or less. This is because it is difficult to identify the warpage shape of a metal strip when the number of distance meters is less than 3, whereas measurement accuracy with respect to the distribution of warpage height does not improve when the number of distance meters exceeds 100.

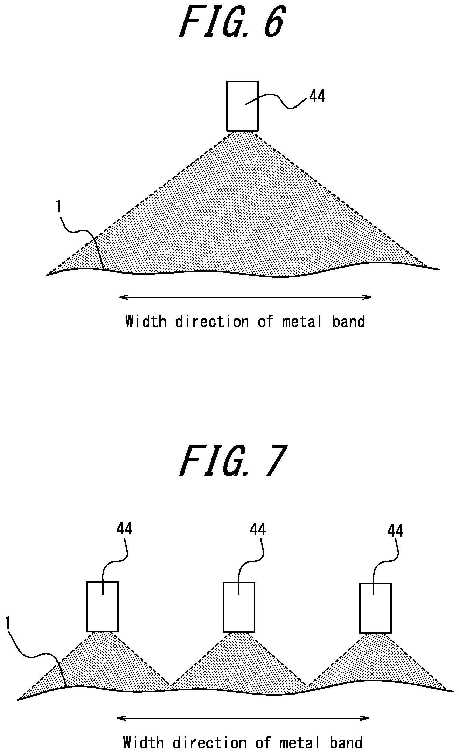

The distance meter may be a laser-scanning distance meter 44 that measures the warpage height at each position in the sheet transverse direction of the metal strip by scanning the laser beam in a fan shape. FIG. 6 illustrates an example of using the laser-scanning distance meter 44 as the warpage shape measurement means. The warpage height can be measured by scanning a laser beam in a fan shape, in the sheet transverse direction, from above the metal strip being conveyed (indicated by 1 in FIG. 6) and measuring the distance to each position in the sheet transverse direction of the metal strip. However, as illustrated in FIG. 7, a plurality of laser-scanning distance meters 44 may be arranged in the sheet transverse direction of the metal strip (indicated by 1 in FIG. 7) to measure the warpage height at each position in the sheet transverse direction of the metal strip for each section in the sheet transverse direction of the metal strip.

As measurement of the warpage shape of the metal strip, the warpage height at each position in the sheet transverse direction of the metal strip may be measured by the optical cutting method. Examples of measurement of warpage height using the optical cutting method include the LJ-X8000 series produced by Keyence and the Gocator produced by LMT Technologies. The optical cutting method measures the displacement in the height direction of the metal strip by first using an image sensor to capture reflected light, from the metal strip, of a laser beam spreading in a fan shape in the sheet transverse direction from above the metal strip and then performing image processing on the captured image.

The measurement accuracy of the warpage height by the warpage shape measuring means is preferably 1 mm or less. The measurement accuracy is more preferably 0.5 mm or less. The reason for this measurement accuracy is to ensure quality assurance in a case in which the warpage height of the metal strip produced by the continuous annealing line is set with an upper limit of about 5 mm to 10 mm.

The measurement of warpage height by the warpage shape measuring means is preferably configured to enable collection at a pitch of 1 m or less in the longitudinal direction of the metal strip. For continuously conveyed metal strips, the measurement frequency of the warpage height is preferably 10 Hz or higher. The measurement frequency is more preferably 20 Hz or higher. The reason for this measurement frequency is to enable collection at a pitch of 1 m or less in the longitudinal direction of the metal strip, since the metal strip may be conveyed at a speed of 600 m/min or more in the delivery-side line of the continuous annealing line. In this case, the warpage shape of the metal strip is preferably measured using a laser-scanning distance measurement method or the optical cutting method. The reason is that the laser-scanning distance measurement method and the optical cutting method can measure the warpage height at each position in the width direction of the metal strip at a measurement frequency of 10 Hz or higher. On the other hand, in a method of arranging a plurality of distance meters that measure the distance in a specific direction by a laser beam instead of the laser-scanning distance meter 44, the measurement accuracy of the warpage height in the vicinity of the sheet width edge of the metal strip may decrease depending on the distance between adjacent distance meters. When attempting to measure the warpage height at the sheet width edge of the metal strip width by means of a mechanism that moves the distance meter along the sheet transverse direction of the metal strip, it may be difficult to set the measurement frequency to 10 Hz or higher. Here, the warpage height measured by the warpage shape measuring means may be averaged over a range of about 1 m to 5 m in the longitudinal direction of the metal strip and taken as the warpage shape. Even if the metal strip includes both the warpage shape and the wave-like shape, this configuration enables identification of the warpage shape while excluding the wave-like shape.

The first warpage shape measurement unit 14 can be arranged at any position that is downstream of the shape adjustment unit 13 and before the metal strip is wound by the tension reel 15 in the continuous annealing line illustrated in FIG. 1. A typical continuous annealing line is often equipped with an inspection table, downstream of the shape adjustment unit 13, to perform inspections for surface defects and the like in the metal strip. Therefore, the first warpage shape measurement unit 14 is preferably installed near the delivery-side inspection table of the continuous annealing line. This enables mapping with quality inspection information other than the warpage height of the metal strip.

### <Warpage shape identification unit>

The production line for a metal strip of the present embodiment includes a warpage shape identification unit 41 that identifies positional information from a tip of the metal strip and identifies a correspondence relationship between the warpage shape of the metal strip measured by the first warpage shape measurement unit 14 as described above and the positional information from the tip of the metal strip. In other words, the warpage shape identification unit 41 generates information on the warpage height distribution of the metal strip, which is associated with the positional information from the tip of the metal strip, as a warpage shape identification step.

The positional information from the tip of the metal strip refers to the longitudinal distance of the metal strip from a welded portion, which is the lead end of the metal strip. The control computer 40, which manages operations by the continuous annealing line illustrated in FIG. 1, generates tracking information for the welded portion. By using information on the conveying speed of the metal strip passing through the first warpage shape measurement unit 14, the positional information from the tip of the metal strip passing through the first warpage shape measurement unit 14 can be identified by internal calculations of the control computer 40. The warpage shape identification unit 41 may acquire the tracking information for the welded portion and the conveying speed of the metal strip passing through the first warpage shape measurement unit 14 from the control computer 40 to identify the positional information from the tip of the metal strip. By acquiring height distribution information in the sheet transverse direction of the metal strip as collected by the first warpage shape measurement unit 14, the warpage shape identification unit 41 can identify the correspondence relationship between the warpage shape of the metal strip measured by the first warpage shape measurement unit 14 and the positional information from the tip of the metal strip.

The information on the warpage height distribution of the metal strip associated with the positional information from the tip of the metal strip as identified by the warpage shape identification unit 41 refers, for example, to how a curve representing the relationship between the position in the sheet transverse direction and the warpage height, illustrated in FIG. 5, is associated with the positional information from the tip of the metal strip. The warpage height of the metal strip that has undergone the shape adjustment step varies in the longitudinal direction due to the fact that cooling conditions of the metal strip in the cooling unit or adjustment conditions in the shape adjustment unit 13 vary in the longitudinal direction of the metal strip. Therefore, quality control is facilitated by identifying the warpage height at a specific position, rather than a representative value of the warpage height of the metal strip that becomes a product. The warpage shape identification unit 41 preferably identifies the positional information at a plurality of positions at different distances from the tip of the metal strip and the warpage height distribution at each position. The warpage shape identification unit 41 identifies the warpage height distribution at positions set in advance, such as the lead end (e.g., within 20 m of the welded portion), steady portion, and tail end (e.g., within 20 m of the welded portion at the tail end) of the metal strip. The reason is that for quality assurance of metal products, it is customary to inspect the lead end, steady portion, and tail end to determine whether the product is acceptable. In a case in which the warpage height measured by the warpage shape measuring means is averaged over a range of about 1 m to 5 m in the longitudinal direction of the metal strip as the warpage shape, the range from the tip of the metal strip in the longitudinal direction of the metal strip subjected to the averaging process may be used as the corresponding positional information.

Furthermore, the warpage shape identification unit 41 preferably generates information on the warpage height distribution of the metal strip, which is associated with the positional information from the tip of the metal strip, over the entire length of the metal strip at a predetermined pitch from the tip. In this case, the pitch of the positional information is preferably set to about 5 m to 20 m. The reason is that the warpage height distribution at each position in the longitudinal direction of the metal strip can be identified to determine whether the metal strip satisfies the warpage height standard, set as a product specification, over the entire length of the metal strip. Reliable quality assurance can thereby be achieved. For example, even if a portion of the metal strip in the longitudinal direction does not satisfy the product specifications for warpage height, the portion with defective warpage height can be cut off downstream in the continuous annealing line or in a recoil line or the like in order to ship, as a product, only the portion that satisfies the product specifications.

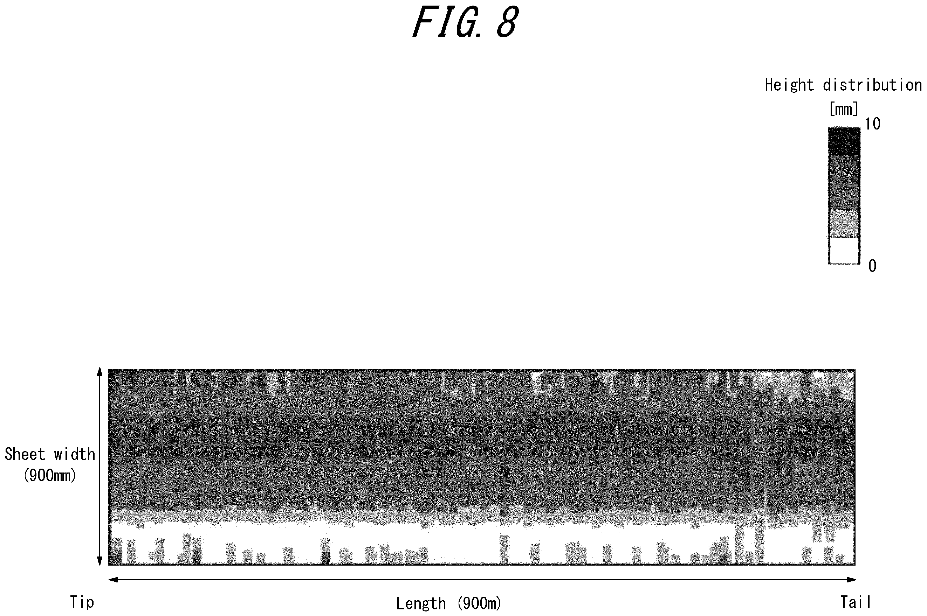

The warpage shape identification unit 41 may generate information on the warpage height distribution of the metal strip, which is associated with the positional information from the tip of the metal strip, over the entire length of the metal strip at a predetermined pitch from the tip and illustrate this information by means of contour lines in the plane of the metal strip or by a color-coded image of the warpage height. FIG. 8 illustrates an example of representing the warpage height, in a plane whose coordinates are the position in the longitudinal direction from the tip of the metal strip and the position in the sheet transverse direction, as an image classified by grayscale shading. The display of the distribution state of warpage height in the plane of the metal strip enables identification of areas where warpage height quality defects have occurred and enables the judge of acceptability of the product easily to discern whether product specifications are satisfied and to identify the in-plane positions where product specifications are not satisfied. Here, the judge may, for example, be the control computer 40 or a human being.

Furthermore, when information on the warpage height distribution of the metal strip, which is associated with the positional information from the tip of the metal strip, is acquired by the warpage shape identification unit 41, contrasting this information with changes in operating conditions in the longitudinal direction in the production line for a metal strip makes it easy to identify operating conditions that increase the warpage height. For example, the correspondence relationship between the conveying speed of the metal strip in the cooling unit and the warpage height information can contribute to optimization of the operating conditions, such as performing operations with restrictions on the conveying speed of the metal strip in the cooling unit.

### <Second embodiment>

The second embodiment of the present disclosure includes a second warpage shape measurement apparatus (second warpage shape measurement unit 42) that measures the warpage shape of the metal strip between the cooling unit and the shape adjustment unit 13 in the aforementioned production line for a metal strip. The warpage shape identification unit 41 identifies a correspondence relationship between the warpage shape of the metal strip measured by the first warpage shape measurement unit 14, the warpage shape of the metal strip measured by the second warpage shape measurement unit 42, and the positional information from the tip of the metal strip.

The second warpage shape measurement unit 42 is arranged between the cooling zone 8 and the shape adjustment unit 13 in the continuous annealing line illustrated in FIG. 1. In this way, the second warpage shape measurement unit 42 measures the warpage height after the metal strip has been quenched but before shape adjustment. The method of measuring warpage height by the second warpage shape measurement unit 42 may be the same as that of the first warpage shape measurement apparatus (first warpage shape measurement unit 14).

The warpage shape identification unit 41 in the present embodiment is configured to identify the correspondence relationship between the warpage shape of the metal strip measured by the first warpage shape measurement unit 14 and the positional information from the tip of the metal strip, as described above, and to identify the warpage shape of the metal strip measured by the second warpage shape measurement unit 42. That is, the warpage shape of the metal strip measured by the first warpage shape measurement unit 14 and the warpage shape of the metal strip measured by the second warpage shape measurement unit 42 are associated with the positional information from the tip of the metal strip and identified in a contrastable manner. In this case, since the control computer 40 generates tracking information for the welded portion, the use of information on the conveying speed of the metal strip passing through the second warpage shape measurement unit 42 enables identification of positional information from the tip of the metal strip. The warpage shape of the metal strip downstream of the cooling unit and the warpage shape downstream of the shape adjustment unit 13 are thereby associated via the positional information from the tip of the metal strip. That is, at the same position in the longitudinal direction of the metal strip, the warpage height after the cooling step can be compared with the warpage height after completion of the shape adjustment step.

In-plane stress occurs in the sheet transverse direction of the metal strip at the end of the cooling step and the shape adjustment step, and the warpage shape of the metal strip measured by the first warpage shape measurement unit 14 is caused by an inability to maintain this in-plane stress within the plane of the metal strip, causing the metal strip to be displaced out of plane due to buckling. However, even after the metal strip has buckled, the in-plane stress of the metal strip is not completely released, and a certain amount of stress often remains in the plane. Therefore, when the metal strip to be shipped as a product is cut into sheet material for parts processing or the like, the in-plane residual stress is released, and the warpage shape of the metal strip may deteriorate.

On the other hand, the magnitude of residual stress formed in the plane of the metal strip after the shape adjustment step is correlated with the amount of change from the warpage shape of the metal strip after the cooling step to the warpage shape after the shape adjustment step. That is, the metal strip before the cooling step releases internal residual stress by being heated by the heating unit. However, warpage occurs in the metal strip due to thermal contraction and phase transformation during the cooling step. Subsequently, when the shape of the metal strip is changed in the shape adjustment step, residual stress is generated in proportion to the amount of change. In the present embodiment, the warpage height after the cooling step can be compared with the warpage height after the shape adjustment step at the same position in the longitudinal direction of the metal strip. Hence, the residual stress in the metal strip can be estimated to be greater as the change in warpage height at the same position is greater.

Therefore, H1, which is the warpage height corresponding to a predetermined quality standard, is set during the quality inspection of the metal strip as a product. An acceptability determination of the shape quality can normally be made using the criterion of whether the warpage height of the metal strip satisfies H1 at each position in the longitudinal direction of the metal strip, based on the warpage shape measured by the first warpage shape measurement unit 14. However, according to this method, if the change in warpage height between the second warpage shape measurement unit 42 and the first warpage shape measurement unit 14 is large, it is presumed that residual stress is retained in the metal strip. Therefore, H2 (where H1 > H2), which is a stricter standard than H1, i.e., the warpage shape standard measured by the first warpage shape measurement unit 14, can be applied to make an acceptability determination of the shape quality of the metal strip. This prevents the warpage shape of the metal strip from deteriorating when the metal strip is shipped and cut into sheet material for parts processing.

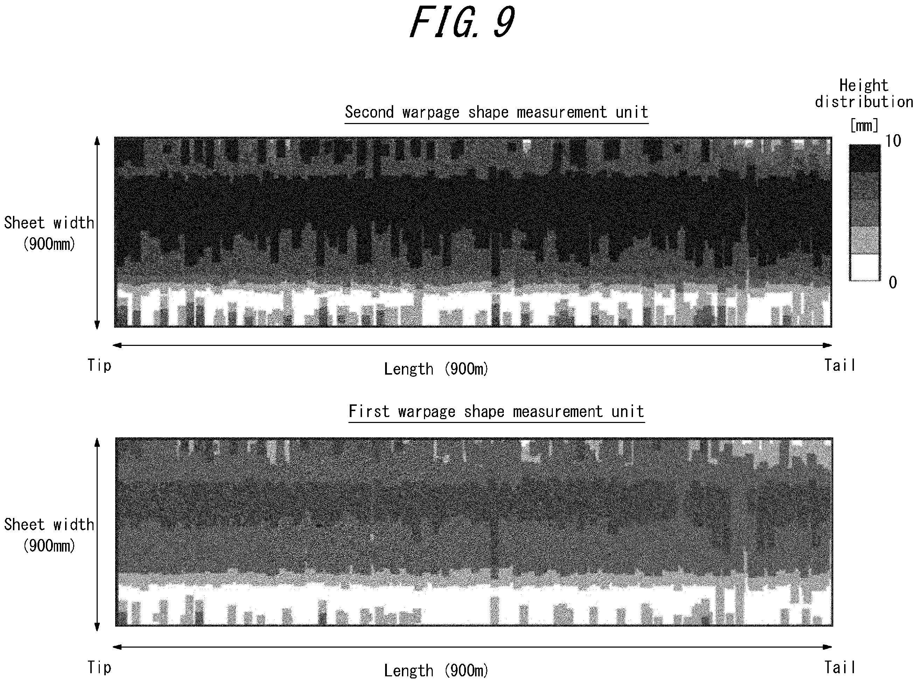

FIG. 9 illustrates an example of information, on the warpage height distribution of a metal strip, generated by the warpage shape identification unit 41. The warpage height distribution of the metal strip as measured by the first warpage shape measurement unit 14 can be contrasted with the warpage height distribution of the metal strip as measured by the second warpage shape measurement unit 42. In the example in FIG. 9, the area of large warpage height as measured by the first warpage shape measurement unit 14 generally coincides with the area of large warpage height as measured by the second warpage shape measurement unit 42 after the cooling step. This enables a determination that the operating conditions of the cooling step should be reset to improve the warpage shape of the metal strip as measured by the first warpage shape measurement unit 14.

### <Third embodiment>

The third embodiment of the present disclosure includes a third warpage shape measurement apparatus (third warpage shape measurement unit 43) that measures the warpage shape of the metal strip between the heating unit and the cooling unit in the aforementioned production line for a metal strip. The warpage shape identification unit 41 is configured to identify a correspondence relationship between the warpage shape of the metal strip measured by the first warpage shape measurement unit 14, the warpage shape of the metal strip measured by the third warpage shape measurement unit 43, and the positional information from the tip of the metal strip. The third warpage shape measurement unit 43 can also acquire the warpage shape of the metal strip by the same method as the first warpage shape measurement unit 14. The same method is used to acquire, from the control computer 40, positional information from the tip of the metal strip passing through the third warpage shape measurement unit 43.

The warpage shape identification unit 41 in the present embodiment identifies the correspondence relationship between the warpage shape of the metal strip measured by the first warpage shape measurement unit 14 and the positional information from the tip of the metal strip and to identify the warpage shape of the metal strip measured by the third warpage shape measurement unit 43. That is, the warpage shape of the metal strip measured by the first warpage shape measurement unit 14 and the warpage shape of the metal strip measured by the third warpage shape measurement unit 43 are associated with the positional information from the tip of the metal strip and identified in a contrastable manner. In this case, the third warpage shape measurement unit 43 may be arranged at any position downstream of the heating zone 6 and upstream of the cooling zone 8 (or the immersion tank 23 in a case in which a cooling apparatus using a water cooling method is included). The reason is that the change in shape of the metal strip in the soaking zone 7 is relatively small and can be ignored for practical purposes.

In the present embodiment, the warpage shape of the metal strip upstream of the cooling unit and the warpage shape downstream of the shape adjustment unit 13 are associated via the positional information from the tip of the metal strip. That is, at the same position in the longitudinal direction of the metal strip, the warpage height before the cooling step can be compared with the warpage height after completion of the cooling step and the shape adjustment step.

Furthermore, in the aforementioned production line for a metal strip, the third warpage shape measurement unit 43 may be arranged between the heating unit and the cooling unit, and the second warpage shape measurement unit 42 may be arranged between the cooling unit and the shape adjustment unit 13. The warpage shape identification unit 41 may identify a correspondence relationship between the warpage shape of the metal strip measured by the first warpage shape measurement unit 14, the warpage shape of the metal strip measured by the second warpage shape measurement unit 42, the warpage shape of the metal strip measured by the third warpage shape measurement unit 43, and the positional information from the tip of the metal strip.

As described above, the metal strip before the cooling step releases internal residual stress by being heated by the heating unit. However, even with the internal residual stress released, if the metal strip has warpage, residual stress corresponding to the warpage will be generated during the cooling step and shape adjustment step. In other words, residual stress corresponding to the change from the warpage shape of the metal strip before the cooling step to the warpage shape after the shape adjustment step is formed at the time of passing through the first warpage shape measurement unit 14. In the present embodiment, the warpage height before the cooling step can be compared with the warpage height after the shape adjustment step at the same position in the longitudinal direction of the metal strip. Hence, the residual stress in the metal strip can be estimated to be greater as the change in warpage height at the same position is greater.

By use of the second warpage shape measurement unit 42 to identify the warpage shape between the cooling step and the shape adjustment step, the change in residual stress generated in the plane of the metal strip can be estimated. Residual stress generated in the cooling step is isotropic in the plane of the metal strip because the residual stress results from thermal contraction and phase transformation of the metal strip. In contrast, the residual stress generated in the shape adjustment step is due to plastic deformation in the longitudinal direction or sheet transverse direction of the metal strip and thus is generated mainly in the longitudinal direction and sheet transverse direction in the plane of the metal strip. Therefore, it is presumed that isotropic residual stress is generated in the metal strip after the shape adjustment step according to the difference between the warpage shape of the metal strip measured by the third warpage shape measurement unit 43 and the warpage shape of the metal strip measured by the second warpage shape measurement unit 42. It is also presumed that residual stress in the longitudinal direction or sheet transverse direction is generated according to the difference between the warpage shape of the metal strip measured by the second warpage shape measurement unit 42 and the warpage shape of the metal strip measured by the first warpage shape measurement unit 14. In this way, use of the second warpage shape measurement unit 42 enables isolation and evaluation of the characteristics of the residual stress that is generated in the metal strip after the shape adjustment step.

Therefore, during quality inspection of the metal strip as a product, if H1, i.e., the warpage height corresponding to a predetermined quality standard, is set and the change in warpage height between the third warpage shape measurement unit 43 and the first warpage shape measurement unit 14 is large, residual stress is presumed to be retained in the metal strip. Therefore, H3 (where H1 > H3), which is a stricter standard than H1, i.e., the warpage shape standard measured by the first warpage shape measurement unit 14, can be applied to make an acceptability determination of the shape quality of the metal strip. Furthermore, H1 may be changed according to the change in warpage height between the second warpage shape measurement unit 42 and the first warpage shape measurement unit 14 and the change in warpage height between the third warpage shape measurement unit 43 and the first warpage shape measurement unit 14. The metal strip that becomes a product will undergo various secondary processes. By setting product quality standards in detail according to the characteristics of the residual stress generated in the metal strip, reliable quality assurance can be achieved.

### EXAMPLES

The effects of the present disclosure will be described in detail below based on examples, but the present disclosure is not limited to these examples.

### (Example 1)

As Example 1 of the present disclosure, an acceptability determination regarding the warpage shape of a metal strip is described using the continuous annealing line illustrated in FIG. 1. In this example, in the continuous annealing line illustrated in FIG. 1, the first warpage shape measurement unit 14 is arranged on an inspection table for quality inspection located at the delivery-side of the continuous annealing line, with the heating zone 6 as the heating unit and the immersion tank 23 as the cooling unit.

The cooling apparatus using a water cooling method, illustrated in FIG. 3, was used as the cooling unit. The cooling apparatus includes a cooling fluid injection apparatus 21 and at least a pair of restraining rollers 22 that restrain the metal strip, the cooling fluid injection apparatus 21 including a plurality of nozzles that inject a cooling fluid (liquid) onto the metal strip from both sides of the metal strip. The diameter of the restraining rollers 22 is 150 mm, and the pair of restraining rollers 22 is offset by 80 mm relative to the direction of travel of the metal strip at the front and back sides of the metal strip. The restraining roller 22 arranged at the back side of the metal strip can be pushed into the metal strip with a maximum amount of push of 20 mm. The amount of push was set according to the strength and dimensions of the metal strip to be produced.

A four-high temper rolling mill 30 was applied to the shape adjustment unit 13, and the roll gap of the work roll was set so that the elongation of the metal strip was in a range of 0.1 % to 0.2 %. However, since the maximum load of the temper rolling mill 30 is 8000 kN, the aforementioned elongation ratio could not always be achieved for metal strips with a tensile strength of 1320 MPa or higher.

The first warpage shape measurement unit 14 used a laser-scanning distance meter to measure the warpage shape of the metal strip. This measures the height distribution in the sheet transverse direction of the metal strip by scanning a laser beam in the sheet transverse direction of the metal strip. Actual data on the warpage shape can be collected at a pitch of 1 m in the longitudinal direction of the metal strip under a set of conditions including a measurement frequency of the warpage height by the first warpage shape measurement unit 14 of 20 Hz and a maximum speed of 600 m/min at the delivery-side line in the continuous annealing line.

The warpage shape identification unit 41 in this example acquired the tracking information on the welded portion, which is the lead end of the metal strip, from the control computer 40 as necessary. The warpage shape identification unit 41 identified the positional information from the tip of the metal strip using the information on the conveying speed of the metal strip at the delivery-side line 124 and identified the correspondence relationship between the warpage shape of the metal strip measured by the first warpage shape measurement unit 14 and the positional information from the tip of the metal strip. The correspondence relationship between the warpage shape of the metal strip identified by the warpage shape identification unit 41 and the positional information from the tip of the metal strip is displayed on a monitor screen, in the operation room where the judge who makes the acceptability determination of the product is located, by use of a color-coded image of the warpage height distribution, as illustrated in FIG. 8.

In the present example, the aforementioned production line was used to produce a high strength steel sheet with a thickness of 1.0 mm to 1.8 mm, a width of 800 mm to 1250 mm, and a tensile strength grade of 1310 MPa to 1470 MPa. In the present example, the conveying speed of the metal strip passing through the cooling zone 8 was 40 m/min to 120 m/min, the target temperature at the start of cooling of the metal strip was 740 °C, and the target temperature at the end of cooling was 30 °C.

In the present example, the judge who made the acceptability determination of the product made the acceptability determination of the metal strip based on the image, displayed on the monitor screen, depicting the correspondence relationship between the warpage shape of the metal strip and the positional information from the tip of the metal strip. The acceptability standards for the metal strip were such that the metal strip was deemed acceptable when the maximum warpage height of the metal strip was 10 mm or less and unacceptable when the maximum warpage height exceeded 10 mm over the entire surface of the metal strip in the sheet transverse direction and the longitudinal direction. Furthermore, the metal strip after being wound as a coil by the tension reel 15 of the continuous annealing line was sent to the recoil line for detailed product inspection, and the warpage shape of the metal strip was inspected again. In the recoil line, conveyance of the metal strip was stopped as needed to inspect the warpage height of the metal strip along the entire length thereof while the metal strip was conveyed at a low speed of 50 m/min or less. As a result, all 24 coils of the metal strip determined to be acceptable by the judge at the inspection table of the continuous annealing line, as described above, were judged to be acceptable at the recoil line. All 13 coils of the metal strip determined to be unacceptable by the judge at the inspection table of the continuous annealing line were also judged to be unacceptable at the recoil line. In other words, the accuracy rate at the inspection table of the continuous annealing line was 100 %.

In contrast, an acceptability determination of the warpage height of the metal strip was made based on the magnitude of the difference in elongation of the metal strip as measured by a contact-type shape meter arranged at the delivery side of the temper rolling mill 30. Among the 16 coils of the metal strip that were determined to be acceptable based on the contact-type shape meter, 75.0 % were also determined to be acceptable on the recoil line. Among the 22 coils of the metal strip that were determined to be unacceptable based on the contact-type shape meter, 63.3 % were also determined to be unacceptable on the recoil line.

### (Example 2)

As Example 2 of the present disclosure, an acceptability determination regarding the warpage shape of a metal strip is described using the continuous annealing line illustrated in FIG. 1. In the present example, in the continuous annealing line illustrated in FIG. 1, the heating zone 6 is the heating unit, the immersion tank 23 is the cooling unit, and the temper rolling mill 30 is the shape adjustment unit. The first warpage shape measurement unit 14 was arranged on the inspection table for quality inspection located on the delivery side of the continuous annealing line, and the second warpage shape measurement unit 42 was arranged between the cooling unit and the shape adjustment unit.

The cooling unit, the shape adjustment unit 13, and the first warpage shape measurement unit 14 are the same as in Example 1. In the second warpage shape measurement unit 42, a laser-scanning distance meter was applied in the same way as in the first warpage shape measurement unit 14 to measure the warpage shape of the metal strip before the shape adjustment step.

The warpage shape identification unit 41 in this example acquired the tracking information on the welded portion, which is the lead end of the metal strip, from the control computer 40 as necessary. The warpage shape identification unit 41 identified the positional information from the tip of the metal strip using the information on the conveying speed of the metal strip passing through the furnace line 121 and identified the correspondence relationship between the warpage shape of the metal strip measured by the second warpage shape measurement unit 42 and the positional information from the tip of the metal strip. Furthermore, the warpage shape identification unit 41 identified the positional information from the tip of the metal strip using the information on the conveying speed of the metal strip at the delivery-side line 124 and identified the correspondence relationship between the warpage shape of the metal strip measured by the first warpage shape measurement unit 14 and the positional information from the tip of the metal strip. As a result, at the same position in the longitudinal direction of the metal strip, the warpage height after the cooling step was associated with the warpage height after completion of the shape adjustment step via the positional information from the tip of the metal strip.

In the present example, the aforementioned production line was used to produce a high strength steel sheet with a thickness of 1.6 mm to 2.0 mm, a width of 800 mm to 1250 mm, and a tensile strength grade of 1470 MPa. In the present example, the conveying speed of the metal strip passing through the cooling zone 8 was 40 m/min to 80 m/min, the target temperature at the start of cooling of the metal strip was 740 °C, and the target temperature at the end of cooling was 30 °C.

In the present example, the following acceptable range of warpage height measured by the first warpage shape measurement unit 14 was defined as the standard for the acceptability determination of the product. In a case in which the difference between the warpage height measured by the first warpage shape measurement unit 14 and the warpage height measured by the second warpage shape measurement unit 42 (hereinafter simply referred to as "warpage height difference") at the same position from the tip of the metal strip was 10 mm or more, the acceptable range was 4 mm or less. In a case in which the warpage height difference was less than 10 mm at the same position from the tip of the metal strip, the acceptable range was 5 mm or less. In other words, the acceptability determination in the present example was made by determining the metal strip to be acceptable when the aforementioned two standards were satisfied, and unacceptable when at least one of the aforementioned two standards was not satisfied, over the entire surface of the metal strip in the sheet transverse direction and the longitudinal direction. That is, a metal strip is acceptable if it satisfies a set of conditions including a warpage height measured by the first warpage shape measurement unit 14 of 4 mm or less for a warpage height difference of 10 mm or more, and a warpage height measured by the first warpage shape measurement unit 14 of 5 mm or less for a warpage height difference of less than 10 mm, over the entire surface of the metal strip. The acceptability determination of the metal strip was thus made with stricter acceptability standards than in Example 1 above.

On the other hand, to evaluate the validity of the acceptability determination by the aforementioned method, the metal strip after being wound as a coil by the tension reel 15 of the continuous annealing line was sent to the recoil line for detailed product inspection, and the warpage shape of the metal strip was inspected again. In the recoil line, the metal strip was divided by cutting in the longitudinal direction as appropriate so that the weight of the metal strip satisfied the product specifications. In the recoil line, conveyance of the metal strip was stopped as needed to inspect the warpage height of the metal strip along the entire length thereof while the metal strip was conveyed at a low speed of 50 m/min or less. As a result, all 12 coils of the metal strip determined to be acceptable at the inspection table of the continuous annealing line, as described above, were judged to be acceptable at the recoil line.

All 20 coils of the metal strip determined to be unacceptable at the inspection table of the continuous annealing line were also judged to be unacceptable at the recoil line. In other words, the accuracy rate at the inspection table of the continuous annealing line was 100 %.

In contrast, the aforementioned 32 coils were subjected to an acceptability determination with an acceptable range of 5 mm or less for the warpage height measured by the first warpage shape measurement unit 14, regardless of the warpage height measured by the second warpage shape measurement unit 42. In the case of this acceptability determination, 13 coils were determined to be acceptable, while 1 coil among the 13 was determined to be unacceptable in the recoil line.

While embodiments of the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each step, or the like can be rearranged without logical inconsistency, and a plurality of components, steps, or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

### REFERENCE SIGNS LIST

- 2: Pay-off reel
- 3: Welder
- 4: Entry-side looper
- 5: Preheating zone
- 6: Heating zone
- 7: Soaking zone
- 8: Cooling zone
- 9: Reheating zone
- 10: Overaging zone
- 11: Final cooling zone
- 12: Delivery-side looper
- 13: Shape adjustment unit
- 14: First warpage shape measurement unit
- 15: Tension reel
- 21: Cooling fluid injection apparatus
- 22: Restraining roller
- 23: Immersion tank
- 24: Coolant
- 25: Suppression roller
- 26: Deflector roller
- 28: Drainage roller
- 29: Drying furnace
- 30: Temper rolling mill
- 32a: Work roll
- 32b: Work roll
- 33a: Backup roller
- 33b: Backup roller
- 34: Entry-side bridle roller
- 35: Delivery-side bridle roller
- 36: Entry-side tension meter
- 37: Delivery-side tension meter
- 40: Control computer
- 41: Warpage shape identification unit
- 42: Second warpage shape measurement unit
- 43: Third warpage shape measurement unit
- 44: Laser-scanning distance meter
- 120: Entry-side line
- 121: Furnace line
- 122: Annealing line
- 123: Reheating line
- 124: Delivery-side line

## Claims

1. A production line for a metal strip, comprising:
a heating unit configured to continuously heat a metal strip being conveyed;
a cooling unit configured to cool the metal strip heated in the heating unit;
a shape adjustment unit configured to perform shape adjustment of the metal strip cooled in the cooling unit;
a first warpage shape measurement unit located downstream of the shape adjustment unit and configured to measure a warpage shape of the metal strip; and
a warpage shape identification unit configured to identify positional information from a tip of the metal strip and identify a correspondence relationship between the warpage shape of the metal strip measured by the first warpage shape measurement unit and the positional information from the tip of the metal strip.

2. The production line for a metal strip according to claim 1, wherein
the production line for a metal strip is a continuous annealing line for a metal strip, and
the cooling unit includes a cooling fluid injection apparatus and at least a pair of restraining rollers that restrain the metal strip, the cooling fluid injection apparatus comprising a plurality of nozzles that inject a cooling fluid onto the metal strip from both sides of the metal strip.

3. The production line for a metal strip according to claim 1 or 2, wherein
the production line for a metal strip is a continuous annealing line for a metal strip, and
the shape adjustment unit comprises at least one shape adjustment means selected from a temper rolling mill, a tension leveler, and a roller leveler.

4. The production line for a metal strip according to any one of claims 1 to 3, further comprising:
a second warpage shape measurement unit configured to measure the warpage shape of the metal strip between the cooling unit and the shape adjustment unit, wherein
the warpage shape identification unit is configured to identify a correspondence relationship between the warpage shape of the metal strip measured by the first warpage shape measurement unit, the warpage shape of the metal strip measured by the second warpage shape measurement unit, and the positional information from the tip of the metal strip.

5. The production line for a metal strip according to any one of claims 1 to 3, further comprising:
a third warpage shape measurement unit configured to measure the warpage shape of the metal strip between the heating unit and the cooling unit, wherein
the warpage shape identification unit is configured to identify a correspondence relationship between the warpage shape of the metal strip measured by the first warpage shape measurement unit, the warpage shape of the metal strip measured by the third warpage shape measurement unit, and the positional information from the tip of the metal strip.

6. The production line for a metal strip according to any one of claims 1 to 3, further comprising:
a second warpage shape measurement unit configured to measure the warpage shape of the metal strip between the cooling unit and the shape adjustment unit, and a third warpage shape measurement unit configured to measure the warpage shape of the metal strip between the heating unit and the cooling unit, wherein
the warpage shape identification unit is configured to identify a correspondence relationship between the warpage shape of the metal strip measured by the first warpage shape measurement unit, the warpage shape of the metal strip measured by the second warpage shape measurement unit, the warpage shape of the metal strip measured by the third warpage shape measurement unit, and the positional information from the tip of the metal strip.

7. The production line for a metal strip according to any one of claims 1 to 6, wherein the warpage shape of the metal strip is measured using at least one warpage shape measurement method selected from a distance measurement method, an image processing method, and an optical cutting method.

8. A method of determining acceptability of a metal strip, the method comprising:
a heating step of continuously heating a metal strip being conveyed;
a cooling step of cooling the metal strip heated in the heating step;
a shape adjustment step of performing shape adjustment of the metal strip cooled during the cooling step;
a first warpage shape measurement step of measuring a warpage shape of the metal strip after the shape adjustment step;
a warpage shape identification step of identifying positional information from a tip of the metal strip and identifying a correspondence relationship between the warpage shape of the metal strip measured in the first warpage shape measurement step and the positional information from the tip of the metal strip; and
a step of displaying a distribution state of warpage height to allow determination of acceptability of the metal strip based on the correspondence relationship, identified in the warpage shape identification step, between the warpage shape of the metal strip and the positional information from the tip of the metal strip.

9. The method of determining acceptability of a metal strip according to claim 8, wherein in the cooling step, a fluid is injected onto the metal strip by a plurality of nozzles from both sides of the metal strip while the metal strip is being restrained using at least a pair of restraining rollers.

10. The method of determining acceptability of a metal strip according to claim 8 or 9, wherein in the shape adjustment step, the shape adjustment of the metal strip is performed using at least one shape adjustment means selected from a temper rolling mill, a tension leveler, and a roller leveler.

11. A method of producing a metal strip, the method comprising producing a metal strip determined to be acceptable by the method of determining acceptability of a metal strip according to any one of claims 8 to 10.
